# EUROPEAN PATENT APPLICATION

(11) **EP 4 822 325 A1**
(43) Date of publication of application: **14.10.2026**
(21) Application number: 24927160.2
(22) Date of filing: 24.09.2024
(51) Int. Cl.: G01M 11/00, G01M 11/02, G02B 6/12, H01S 3/00

(54) **INSPECTION DEVICE AND INSPECTION METHOD**

(30) Priority: 28.02.2024 JP 2024028935
(71) Applicant: Hamamatsu Photonics K.K., Hamamatsu-shi, Shizuoka 435-8558 (JP); Vrije Universiteit Brussel, 1050 Brussel (BE)
(72) Inventor: WATANABE Koyo, Hamamatsu-shi, Shizuoka 435-8558 (JP); VERMEULEN Nathalie, 1050 Brussel (BE)
(74) Representative: Grünecker Patent- und Rechtsanwälte PartG mbB
(86) International application number: PCT/JP2024/033935
(87) International publication number: WO 2025/182121

(57) **Abstract**

An inspection device 1 includes: a pulse forming unit 3 that generates a pulse train Pb in which a plurality of optical pulses Pb1 and Pb2 having different center wavelengths are arranged at predetermined time intervals; a first adjustment unit 4 that matches a polarization direction of each of the optical pulses Pb1 and Pb2 of the pulse train Pb input to a photonic integrated circuit 5 with an in-plane direction of a substrate 50; a correlation optical system 7 that has polarization dependence in a predetermined polarization direction and generates correlation light Pc of the pulse train Pb output from the photonic integrated circuit 5; an optical detection unit 8 that detects a time waveform of the correlation light Pc; and a determination unit 9 that determines whether the photonic integrated circuit 5 is acceptable or defective based on the time waveform. The optical detection unit 8 detects the time waveform multiple times, and the determination unit 9 determines whether the photonic integrated circuit 5 is acceptable or defective based on a plurality of feature quantities in the time waveform detected multiple times.

## Description

### Technical Field

The present disclosure relates to an inspection device and an inspection method.

### Background Art

The dispersion measurement device described in Patent Literature 1 includes: a pulse forming unit that forms, from a first optical pulse output from a measurement target, a pulse train including a plurality of second optical pulses having a time difference therebetween and having different center wavelengths; a correlation optical system that receives the pulse train output from the pulse forming unit and outputs correlation light including the auto-correlation of the pulse train; an optical detection unit that detects a time waveform of the correlation light; and a calculation unit that estimates the amount of chromatic dispersion of the measurement target based on the feature quantities of the time waveform.

Dispersion measurement devices such as the one described above are expected to be used as inspection devices for photonic integrated circuits (PICs). The photonic integrated circuit is a device that integrates various optical functions, and transmits information signals using light. For example, when a pulse train is input to a photonic integrated circuit, chromatic dispersion may occur while the pulse train propagates through the waveguide of the photonic integrated circuit. Therefore, by estimating the chromatic dispersion in a photonic integrated circuit using a dispersion measurement device and inspecting whether or not the chromatic dispersion deviates from the design value, it is possible to determine whether the photonic integrated circuit is acceptable or defective.

### Citation List

### Patent Literature

Patent Literature 1: Japanese Unexamined Patent Publication No. 2020-169946

### Summary of Invention

### Technical Problem

When determining whether the photonic integrated circuit is acceptable or defective using a dispersion measurement device, it is conceivable that structural factors such as the formation state of the sidewalls forming the waveguide may affect the repetitive measurement error of the amount of chromatic dispersion. Therefore, there is a demand for a technique capable of improving the accuracy of determining whether the photonic integrated circuit is acceptable or defective by taking such structural factors into account.

The present disclosure provides an inspection device and an inspection method capable of improving the accuracy of determining whether the photonic integrated circuit is acceptable or defective by taking structural factors into account.

### Solution to Problem

The present disclosure is summarized as follows.
[1] An inspection device for inspecting a photonic integrated circuit in which a waveguide is provided on a substrate, the device including: a pulse forming unit that generates a pulse train in which a plurality of optical pulses having different center wavelengths are arranged at predetermined time intervals; a first adjustment unit that matches a polarization direction of each optical pulse of the pulse train input to the photonic integrated circuit with an in-plane direction of the substrate; a correlation optical system that has polarization dependence in a predetermined polarization direction and generates correlation light including cross-correlation light or auto-correlation light of the pulse train output from the photonic integrated circuit through the waveguide; an optical detection unit that detects a time waveform of the correlation light; and a determination unit that determines whether the photonic integrated circuit is acceptable or defective based on the time waveform, wherein the optical detection unit detects the time waveform multiple times, and the determination unit determines whether the photonic integrated circuit is acceptable or defective based on a plurality of feature quantities in the time waveform detected multiple times.
   In this inspection device, the pulse train is input to the photonic integrated circuit such that the polarization direction of each of the plurality of optical pulses matches the in-plane direction of the substrate. Therefore, since the polarization directions of the optical pulses cross structures such as sidewalls that form the waveguide, if there is an abnormality in the formation state, the repetitive measurement error of the amount of chromatic dispersion increases. In this inspection device, the amount of chromatic dispersion is regarded as a feature quantity in the time waveform. By using the repetitive measurement error of the feature quantity calculated based on a plurality of feature quantities, it is possible to improve the accuracy of determining whether the photonic integrated circuit is acceptable or defective while taking structural factors into account.
[2] The inspection device according to [1], wherein the determination unit determines whether the photonic integrated circuit is acceptable or defective according to whether or not the plurality of feature quantities fall within an allowable range set in advance. In this case, the accuracy of determining whether the photonic integrated circuit is acceptable or defective can be further improved by comparing the plurality of feature quantities with the allowable range.
[3] The inspection device according to [1], wherein the determination unit determines whether the photonic integrated circuit is acceptable or defective according to whether or not a measurement error amount calculated based on the plurality of feature quantities falls within an allowable range set in advance. In this case, the accuracy of determining whether the photonic integrated circuit is acceptable or defective can be further improved by taking into account the statistical trends of the plurality of feature quantities.
[4] The inspection device according to [2] or [3], further including: a storage unit that stores data of the allowable range, wherein the determination unit determines whether the photonic integrated circuit is acceptable or defective by reading the data of the allowable range from the storage unit. In this case, since the storage unit that stores the data of the allowable range is provided in advance, it is possible to reduce the time required to read the data, thereby shortening the time required to determine whether the photonic integrated circuit is acceptable or defective.
[5] The inspection device according to any one of [1] to [4], further including: a first polarization-maintaining fiber that optically connects the pulse forming unit to the photonic integrated circuit, wherein the first adjustment unit is a rotation mechanism that rotates the first polarization-maintaining fiber around its axis. In this case, the polarization direction of each optical pulse of the pulse train input to the photonic integrated circuit can be easily adjusted by rotating the first polarization-maintaining fiber around its axis.
[6] The inspection device according to any one of [1] to [5], further including: a second adjustment unit that extracts TE-mode components of the pulse train output from the photonic integrated circuit. In this case, the pulse train is input to the correlation optical system by the second adjustment unit such that the polarization direction of the pulse train matches the polarization direction in which the correlation optical system has polarization dependence. Therefore, the correlation light can be efficiently generated in the correlation optical system.
[7] The inspection device according to [6], further including: a second polarization-maintaining fiber that optically connects the photonic integrated circuit to the correlation optical system, wherein the second adjustment unit is a rotation mechanism that rotates the second polarization-maintaining fiber around an axis of the second polarization-maintaining fiber. In this case, the polarization mode of each optical pulse of the pulse train input to the second polarization-maintaining fiber can be easily selected by rotating the in-plane direction of the substrate of the photonic integrated circuit around the axis of the second polarization-maintaining fiber.
[8] The inspection device according to [7], wherein the rotation mechanism rotates the second polarization-maintaining fiber around the axis of the second polarization-maintaining fiber so that TE-mode components of the pulse train output from the photonic integrated circuit are extracted. In this case, it is possible to prevent the pulse train Pb from being input to the correlation optical system 7 in a polarization direction that is not preferable for measurement.
[9] An inspection method for inspecting a photonic integrated circuit in which a waveguide is provided on a substrate, the method including: a pulse forming step for generating a pulse train in which a plurality of optical pulses having different center wavelengths are arranged at predetermined time intervals; a first adjustment step for making a polarization direction of each optical pulse of the pulse train input to the photonic integrated circuit orthogonal to an in-plane direction of the substrate; a correlation light generation step for generating correlation light including cross-correlation light or auto-correlation light of the pulse train output from the photonic integrated circuit by using a correlation optical system having polarization dependence in a predetermined polarization direction; an optical detection step for detecting a time waveform of the correlation light; and a determination step for determining whether the photonic integrated circuit is acceptable or defective based on feature quantities of the time waveform, wherein, in the optical detection step, the time waveform is detected multiple times, and in the determination step, whether the photonic integrated circuit is acceptable or defective is determined based on a plurality of feature quantities in the time waveform detected multiple times.
   In this inspection method, the pulse train is input to the photonic integrated circuit such that the polarization direction of each of the plurality of optical pulses matches the in-plane direction of the substrate. Therefore, since the polarization direction of the optical pulse crosses structures such as sidewalls that form the waveguide, if there is an abnormality in the formation state, the repetitive measurement error of the amount of chromatic dispersion increases. In this inspection method, the amount of chromatic dispersion is regarded as a feature quantity in the time waveform. By using the repetitive measurement error of the feature quantity calculated based on a plurality of feature quantities, it is possible to improve the accuracy of determining whether the photonic integrated circuit is acceptable or defective while taking structural factors into account.
[10] The inspection method according to [9], wherein, in the determination step, whether the photonic integrated circuit is acceptable or defective is determined according to whether or not the plurality of feature quantities fall within an allowable range set in advance. In this case, the accuracy of determining whether the photonic integrated circuit is acceptable or defective can be further improved by comparing the plurality of feature quantities with the allowable range.
[11] The inspection method according to [9], wherein, in the determination step, whether the photonic integrated circuit is acceptable or defective is determined according to whether or not a measurement error amount calculated based on the plurality of feature quantities falls within an allowable range set in advance. In this case, the accuracy of determining whether the photonic integrated circuit is acceptable or defective can be further improved by taking into account the statistical trends of the plurality of feature quantities.

### Advantageous Effects of Invention

According to the present disclosure, it is possible to improve the accuracy of determining whether the photonic integrated circuit is acceptable or defective by taking structural factors into account.

### Brief Description of Drawings

[FIG. 1] FIG. 1 is a drawing schematically showing the configuration of an inspection device according to one embodiment of the present invention.
[FIG. 2] FIG. 2 is a drawing showing an example of the configuration of a pulse forming unit.
[FIG. 3] FIG. 3 is a drawing showing an example of a modulation surface of a spatial light modulator.
[FIG. 4] FIG. 4 is a plan view schematically showing a photonic integrated circuit.
[FIG. 5] FIG. 5 is a cross-sectional view showing an example of a cross section of a waveguide in a photonic integrated circuit.
[FIG. 6] FIG. 6 is a drawing schematically showing an example of the configuration of a correlation optical system.
[FIG. 7] FIG. 7 is a drawing schematically showing another example of the configuration of a correlation optical system.
[FIG. 8] FIG. 8(a) is a drawing showing an example of a time waveform of correlation light when no chromatic dispersion occurs in a pulse train, and FIG. 8(b) is a drawing showing an example of a time waveform of correlation light when chromatic dispersion occurs in a pulse train.
[FIG. 9] FIG. 9 is a graph showing an example of a time waveform of correlation light.
[FIG. 10] FIGS. 10(a), 10(b), 10(c), and 10(d) are drawings showing examples of a delay time of a pulse train.
[FIG. 11] FIG. 11 is a diagram schematically showing an example of the hardware configuration of a determination unit.
[FIG. 12] FIG. 12 is a flowchart showing an inspection method using an inspection device.
[FIG. 13] FIG. 13 is a flowchart showing an example of a method for setting an allowable range.
[FIG. 14] FIG. 14 is a graph showing an example of ideal characteristics and an allowable range.
[FIG. 15] FIG. 15 is a graph showing an example of determining whether a photonic integrated circuit is acceptable or defective.
[FIG. 16] FIG. 16 is a graph showing another example of determining whether a photonic integrated circuit is acceptable or defective.

### Description of Embodiments

Hereinafter, preferred embodiments of an inspection device according to one aspect of the present disclosure will be described in detail with reference to the drawings.

### [Configuration of an inspection device]

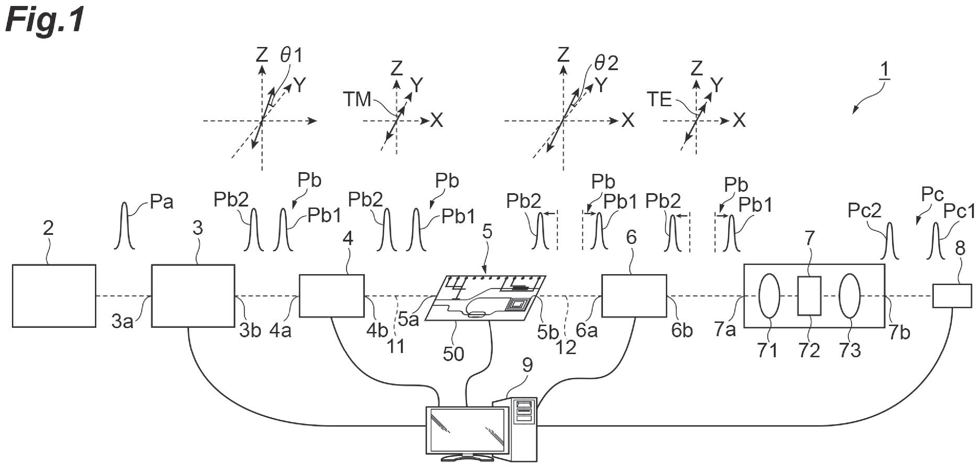

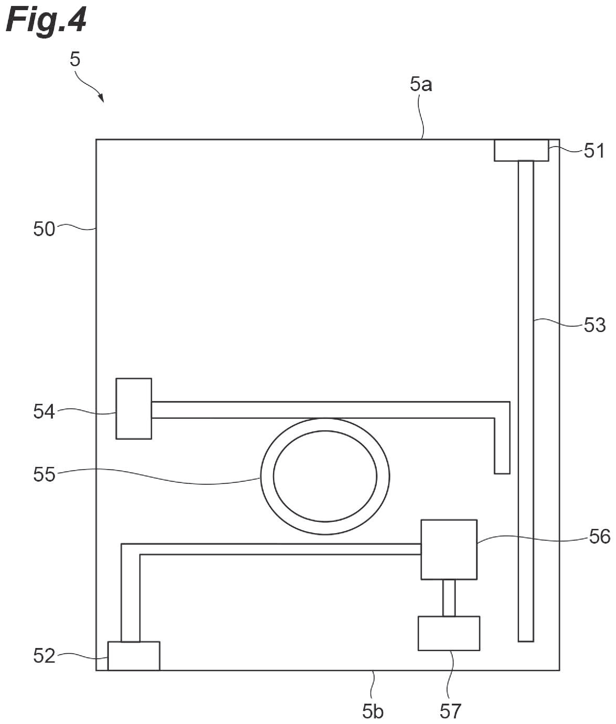

FIG. 1 is a drawing schematically showing the configuration of an inspection device according to one embodiment of the present invention. This inspection device 1 is a device for inspecting a photonic integrated circuit 5. The photonic integrated circuit 5 includes a waveguide 53 (see FIG. 4) provided on a substrate 50. In the present embodiment, the inspection device 1 is a device for measuring the chromatic dispersion of light to be measured that has propagated through the waveguide 53 of the photonic integrated circuit 5. The inspection device 1 includes a pulsed laser light source 2, a pulse forming unit 3, a first adjustment unit 4, a second adjustment unit 6, a correlation optical system 7, an optical detection unit 8, and a determination unit 9.

An optical input end 3a of the pulse forming unit 3 is optically coupled to the pulsed laser light source 2 either spatially or through an optical waveguide such as an optical fiber. An optical input end 4a of the first adjustment unit 4 is optically coupled to an optical output end 3b of the pulse forming unit 3 either spatially or through an optical waveguide such as an optical fiber. An optical input end 5a of the photonic integrated circuit 5 to be inspected is optically coupled to an optical output end 4b of the first adjustment unit 4 either spatially or through an optical waveguide such as an optical fiber. An optical input end 6a of the second adjustment unit 6 is optically coupled to an optical output end 5b of the photonic integrated circuit 5 either spatially or through an optical waveguide such as an optical fiber.

An optical input end 7a of the correlation optical system 7 is optically coupled to an optical output end 6b of the second adjustment unit 6 either spatially or through an optical waveguide such as an optical fiber. The optical detection unit 8 is optically coupled to an optical output end 7b of the correlation optical system 7 either spatially or through an optical waveguide such as an optical fiber. The determination unit 9 is electrically connected to each of the pulse forming unit 3, the photonic integrated circuit 5, and the optical detection unit 8. In addition, the determination unit 9 may be electrically connected to each of the first adjustment unit 4 and the second adjustment unit 6.

The pulsed laser light source 2 outputs a coherent optical pulse to be measured Pa. The pulsed laser light source 2 is, for example, a femtosecond laser, and in one embodiment, is a solid-state laser light source such as an LD direct-pumped Yb:YAG pulsed laser. The time waveform of the optical pulse to be measured Pa is, for example, Gaussian in shape. The optical pulse to be measured Pa is an optical pulse having a predetermined bandwidth, and includes a plurality of continuous wavelength components. In addition, the pulsed laser light source 2 may be a light source that outputs an attosecond laser, a femtosecond laser, or a picosecond laser, or may be a titanium-sapphire laser light source, a semiconductor laser light source, or an F2 laser light source.

The pulse forming unit 3 forms a pulse train Pb including a plurality of optical pulses from the optical pulse to be measured Pa. The pulse train Pb is a group of single pulses generated by dividing the spectrum forming the optical pulse to be measured Pa into a plurality of wavelength bands and using each of the wavelength bands. In addition, at the boundaries of the plurality of wavelength bands, there may be portions overlapping each other. In the following example, the pulse train Pb includes two single pulses, which are optical pulses Pb1 and Pb2. The center wavelength and the wavelength band of the optical pulse Pb1 are different from the center wavelength and the wavelength band of the optical pulse Pb2.

In the pulse train Pb, a plurality of optical pulses Pb1 and Pb2 having different center wavelengths are arranged at predetermined time intervals. The peaks of the two optical pulses Pb1 and Pb2 are temporally separated from each other, and the propagation timings of the two optical pulses Pb1 and Pb2 are shifted from each other. In other words, the other optical pulse Pb2 has a time delay with respect to one optical pulse Pb1. However, tail portions of the adjacent optical pulses Pb1 and Pb2 may overlap each other.

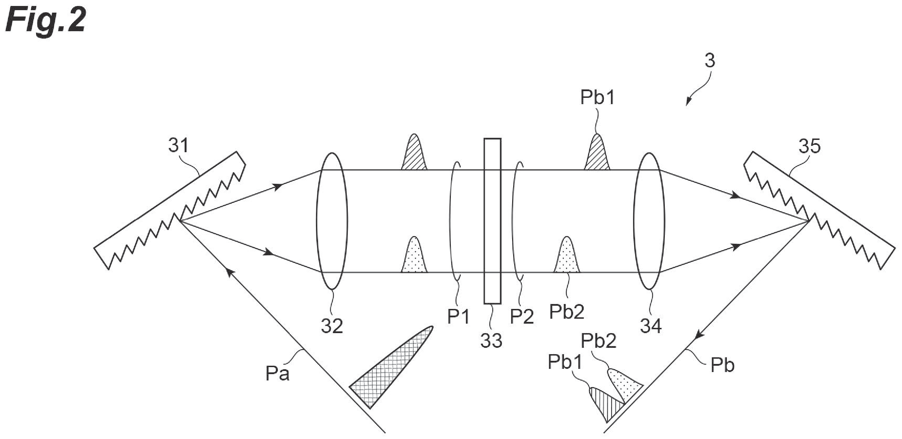

FIG. 2 is a drawing showing an example of the configuration of the pulse forming unit 3. This pulse forming unit 3 includes a diffraction grating 31, a lens 32, a spatial light modulator (SLM) 33, a lens 34, and a diffraction grating 35. The diffraction grating 31 is an example of a spectroscopic element. The diffraction grating 31 is optically coupled to the pulsed laser light source 2. The spatial light modulator 33 is optically coupled to the diffraction grating 31 through the lens 32. The diffraction grating 31 spatially separates, for each wavelength, a plurality of wavelength components included in the optical pulse to be measured Pa. In addition, as the spectroscopic element, other optical components such as a prism may be used instead of the diffraction grating 31. The optical pulse to be measured Pa is incident obliquely on the diffraction grating 31 and is spectrally separated into a plurality of wavelength components. Light P1 including the plurality of wavelength components is condensed for each wavelength component by the lens 32 and is imaged on the modulation surface of the spatial light modulator 33. The lens 32 may be a convex lens formed of a light-transmitting member, or may be a concave mirror having a concave light-reflecting surface.

The spatial light modulator 33 converts the light P1 into modulated light P2. The spatial light modulator 33 may be a reflective spatial light modulator or a transmissive spatial light modulator. In addition, the spatial light modulator 33 may be a liquid crystal type spatial light modulator or a digital mirror device. The modulated light P2 includes the optical pulses Pb1 and Pb2. The spatial light modulator 33 selects two arbitrary wavelength components, as the optical pulses Pb1 and Pb2, from the light P1 including a plurality of wavelength components. For example, the spatial light modulator 33 may perform intensity modulation so that the wavelength components of the optical pulses Pb1 and Pb2 become sufficiently large so that other wavelength components do not have an influence. Depending on the values of the selected wavelength components, a wavelength difference, which is a difference between the wavelength of the optical pulse Pb1 and the wavelength of the optical pulse Pb2, changes. As a result, the spatial light modulator 33 sets the wavelength difference between the two optical pulses Pb1 and Pb2 to an arbitrary magnitude. The wavelength difference that can be set is, for example, 1 nm to 50 nm.

The spatial light modulator 33 shifts the phases of the two optical pulses Pb1 and Pb2 relative to each other. To achieve this, the spatial light modulator 33 performs phase modulation on the light P1. As a result, the optical pulse Pb2 has a time delay with respect to the optical pulse Pb1. That is, the spatial light modulator 33 sets the time difference between the two optical pulses Pb1 and Pb2 to an arbitrary magnitude. The spatial light modulator 33 generates the modulated light P2 by performing intensity modulation and phase modulation on the light P1.

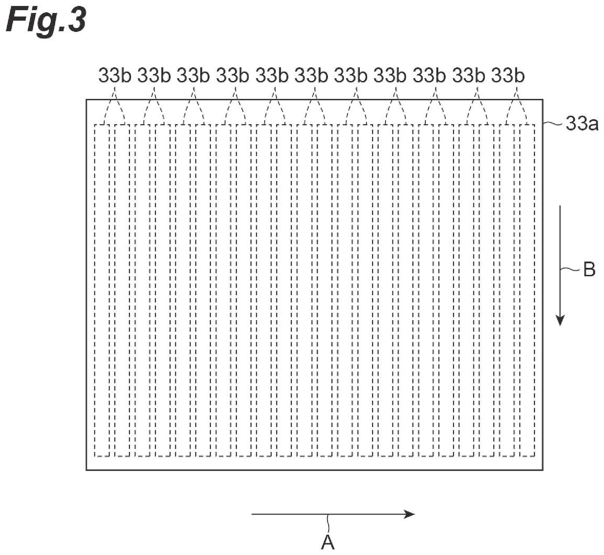

The modulation of the light P1 by the spatial light modulator 33 will be described in more detail. FIG. 3 is a drawing showing a modulation surface 33a of the spatial light modulator 33. As shown in FIG. 3, on the modulation surface 33a, a plurality of modulation regions 33b are arranged along a predetermined direction A, and each modulation region 33b extends in a direction B crossing the direction A. The direction A is a spectral direction by the diffraction grating 31. The modulation surface 33a functions as a Fourier transform plane, and each of the corresponding wavelength components after spectral decomposition is incident on each of the plurality of modulation regions 33b.

The spatial light modulator 33 modulates the intensity and phase of each incident wavelength component independently of other wavelength components in each modulation region 33b. Each modulation region 33b includes, for example, an intensity modulation pattern and a phase modulation pattern. The intensity modulation pattern and the phase modulation pattern differ, for example, for each modulation region 33b. The intensity modulation pattern and the phase modulation pattern in each modulation region 33b change along the direction A and are constant in the direction B, for example. The modulation amount of the intensity pattern in the modulation region 33b on which the wavelength components of the optical pulses Pb1 and Pb2 are incident may be larger than the modulation amount of the intensity pattern in the modulation region 33b on which other wavelength components are incident. The modulation amount of the phase pattern in the modulation region 33b on which the wavelength component of the optical pulse Pb1 is incident may be larger than the modulation amount of the phase pattern in the modulation region 33b on which the wavelength component of the optical pulse Pb2 is incident.

The optical pulses Pb1 and Pb2 included in the modulated light P2 modulated by the spatial light modulator 33 are collected at one point on the diffraction grating 35 by the lens 34. At this time, the lens 34 functions as a condensing optical system that condenses the modulated light P2. The lens 34 may be a convex lens formed of a light-transmitting member, or may be a concave mirror having a concave light-reflecting surface. In addition, the diffraction grating 35 functions as a multiplexing optical system, and multiplexes the optical pulses Pb1 and Pb2. That is, by the lens 34 and diffraction grating 35, the optical pulses Pb1 and Pb2 of the modulated light P2 are condensed and multiplexed to become a band-controlled multi-pulse (pulse train Pb).

Referring again to FIG. 1. The first adjustment unit 4 adjusts the polarization direction of the pulse train Pb output from the pulse forming unit 3. The first adjustment unit 4 matches the polarization directions of the optical pulses Pb1 and Pb2 of the pulse train Pb input to the photonic integrated circuit 5 with an in-plane direction of the substrate 50. In the example shown in FIG. 1, for the sake of explanation, the traveling direction of the pulse train Pb is defined as an X-axis direction. The in-plane direction of the substrate 50 is defined by a Y-axis direction, which is perpendicular to the X-axis direction, and the X-axis direction. The thickness direction of the substrate 50 is defined by a Z-axis direction, which is perpendicular to the X-axis and the Y-axis directions.

The in-plane direction of the substrate 50 matches a polarization direction in a TE (Transverse Electric) mode (transverse polarization mode). In the TE mode, the direction of a main component of an electric field forming the optical pulses Pb1 and Pb2 of the pulse train Pb is along the Y-axis direction and matches the in-plane direction of the substrate 50.

A direction perpendicular to the in-plane direction of the substrate 50 matches a polarization direction in a TM (Transverse Magnetic) mode (longitudinal polarization mode). In the TM mode, the direction of a main component of an electric field forming the optical pulses Pb1 and Pb2 is along the Z-axis direction and is perpendicular to the in-plane direction of the substrate 50.

In one example, the inspection device 1 further includes a first polarization-maintaining fiber 11 that optically connects the optical output end 3b of the pulse forming unit 3 and the optical input end 5a of the photonic integrated circuit 5. The first polarization-maintaining fiber 11 is, for example, a fiber that maintains the polarization direction of the pulse train Pb. The polarization direction of the pulse train Pb propagating through the first polarization-maintaining fiber 11 is maintained in a constant direction.

The first adjustment unit 4 is configured by a rotation mechanism that rotates the first polarization-maintaining fiber 11 around its axis. The axis of the first polarization-maintaining fiber 11 matches a propagation direction (X-axis direction) of the pulse train Pb. The first adjustment unit 4 is configured by, for example, a fiber rotator. The first adjustment unit 4 receives, from the determination unit 9, an instruction regarding an angle for rotating the first polarization-maintaining fiber 11, for example. Based on this instruction, the first adjustment unit 4 may rotate the first polarization-maintaining fiber 11 around the axis of the first polarization-maintaining fiber 11. For example, the first adjustment unit 4 rotates the first polarization-maintaining fiber 11 by a predetermined angle around the axis of the first polarization-maintaining fiber 11. In this case, the polarization directions of the optical pulses Pb1 and Pb2 are rotated by a predetermined angle. The predetermined angle is, for example, greater than 0° and less than 90°.

In the example shown in FIG. 1, the polarization directions of the optical pulses Pb1 and Pb2 are inclined by a first angle θ₁ from the in-plane direction of the substrate 50 at the time the optical pulses Pb1 and Pb2 are output from the pulse forming unit 3. For example, the polarization directions of the optical pulses Pb1 and Pb2 are inclined by the first angle θ₁ from the Y-axis in a plane defined by the Y-axis and the Z-axis. The first adjustment unit 4 converts the polarization modes of the optical pulses Pb1 and Pb2 into a TE mode by rotating the first polarization-maintaining fiber 11 around its axis by the first angle θ₁. As a result, the polarization directions of the optical pulses Pb1 and Pb2 input to the photonic integrated circuit 5 match the in-plane direction of the substrate 50.

FIG. 4 is a plan view schematically showing the photonic integrated circuit 5. The photonic integrated circuit 5 is a device that integrates various optical functions, and transmits information signals using light. The photonic integrated circuit 5 includes the substrate 50. As shown in FIG. 4, the photonic integrated circuit 5 includes various elements, and these elements are mounted on the substrate 50. In the example shown in FIG. 4, the photonic integrated circuit 5 includes an optical input section 51, an optical output section 52, a waveguide 53, photodiodes 54 and 57, an optical ring resonance circuit 55, a photonic crystal 56, and the like.

The optical input section 51 is a part through which light is input from the first adjustment unit 4 to the inside of the photonic integrated circuit 5 through the first polarization-maintaining fiber 11. The optical input section 51 is formed at the optical input end 5a, which is one side surface of the photonic integrated circuit 5. Although only one optical input section 51 is shown in FIG. 4, a plurality of optical input sections 51 are formed at the optical input end 5a. For example, in a state put into practical use after inspection, an optical cable is connected to the optical input section 51.

The optical output section 52 is a part through which the pulse train Pb is output from the photonic integrated circuit 5 toward the second adjustment unit 6. The optical output section 52 is formed at the optical output end 5b, which is the other end surface of the photonic integrated circuit 5. Although a single optical output section 52 is shown in FIG. 4, a plurality of optical output sections 52 may be formed at the optical output end 5b. For example, in a state put into practical use after inspection, an optical cable may be connected to each of the plurality of optical output sections 52. The optical output section 52 may output light guided by the waveguide 53 to the outside of the photonic integrated circuit 5.

The photodiodes 54 and 57 are photodetectors provided inside the photonic integrated circuit 5. The optical ring resonance circuit 55 is a circuit for setting a resonance wavelength. The photonic crystal 56 is a structure in which a refractive index changes periodically, and is a structure that confines light in a small region to manipulate the light. In addition, the photonic integrated circuit 5 may include not only the above-described components (elements) but also various other elements. For example, the photonic integrated circuit 5 may include a microheater (not shown) mounted on each element such as the optical ring resonance circuit 55 or an optical modulator. The microheater controls the resonance wavelength of guided light by changing the refractive index of the waveguides that form each element, such as the optical ring resonance circuit 55 or the optical modulator.

In the example shown in FIG. 4, the waveguide 53 is provided in a straight line from the optical input section 51 to the optical output section 52, but the waveguide 53 may also be formed in a curved shape or in a spiral shape, for example. When the waveguide 53 is curved or spiral, the direction of curvature of the waveguide 53 matches the in-plane direction of the substrate 50. The direction of curvature of the waveguide 53 refers to, for example, a direction in which the waveguide 53 is curved, that is, a direction traced by the curve of the waveguide 53.

In the pulse train Pb input to the photonic integrated circuit 5, chromatic dispersion occurs while the pulse train Pb propagates through the waveguide 53. Since the optical pulses Pb1 and Pb2 have different wavelengths, their propagation speeds in the waveguide 53 are different. As a result, a difference arises between the propagation time of the optical pulse Pb1 and the propagation time of the optical pulse Pb2, causing the time interval between the optical pulse Pb1 and the optical pulse Pb2 to fluctuate.

In the present embodiment, the photonic integrated circuit 5 is optically designed so that the input optical pulses are output while maintaining their polarization mode. However, the polarization mode of the optical pulses may change slightly while the optical pulses propagate through the waveguide 53. In this case, as illustrated in FIG. 1, the polarization modes of the optical pulses Pb1 and Pb2 output from the photonic integrated circuit 5 may be inclined by a second angle θ₂ from the in-plane direction of the substrate 50. The second angle θ₂ may be smaller than the first angle θ₁.

Depending on the polarization directions of the optical pulses Pb1 and Pb2 when the optical pulses Pb1 and Pb2 input to the photonic integrated circuit 5, the likelihood of polarization mixing occurring in the optical pulses Pb1 and Pb2 output from the photonic integrated circuit 5 differs. Polarization mixing is a phenomenon in which the polarization modes of the optical pulses Pb1 and Pb2 include both TE mode and TM mode. In this case, when the ratio between the TE-mode component and the TM-mode component is expressed as a percentage, the closer the ratio between the two is to 50%, the greater the influence of polarization mixing becomes. If the influence of polarization mixing is large, the repetitive measurement error of the amount of chromatic dispersion may be more likely to occur in a determination unit described later.

The magnitude of the influence of polarization mixing changes depending on the polarization directions of the optical pulses Pb1 and Pb2 input to the photonic integrated circuit 5. When the polarization directions of the optical pulses Pb1 and Pb2 input to the photonic integrated circuit 5 are perpendicular to the in-plane direction of the substrate 50 (when the optical pulses Pb1 and Pb2 input in the TM mode), the ratio of the TE mode mixed into the TM mode in the optical pulses Pb1 and Pb2 output from the photonic integrated circuit 5 is approximately several percent. In contrast, when the polarization directions of the optical pulses Pb1 and Pb2 input to the photonic integrated circuit 5 match the in-plane direction of the substrate 50 (when the optical pulses Pb1 and Pb2 input in the TE mode), the ratio of the TM mode mixed into the TE mode in the optical pulses Pb1 and Pb2 output from the photonic integrated circuit 5 increases to approximately 20%. That is, when the optical pulses Pb1 and Pb2 input in the TE mode, the influence of polarization mixing is larger than when the optical pulses Pb1 and Pb2 input in the TM mode.

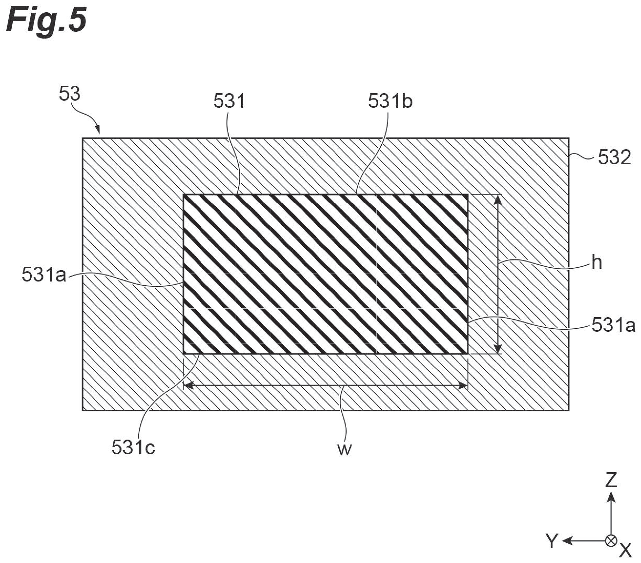

The reason why the influence of polarization mixing in the case of inputting in TE mode is greater than that in the case of inputting in the TM mode is presumed to be due to structural factors of the waveguide, but is not limited thereto. FIG. 5 is a cross-sectional view showing an example of the cross section of the waveguide 53 of the photonic integrated circuit 5. The waveguide 53 includes a core layer 531 and a cladding layer 532. The core layer 531 passes through the center of the waveguide 53 and propagates the pulse train Pb. The cladding layer 532 is formed so as to cover the periphery of the core layer 531. The core layer 531 includes a pair of sidewalls 531a, an upper wall 531b, and a lower wall 531c. It is preferable that the pair of sidewalls 531a of the core layer 531 are formed parallel to the Z-axis direction, which is perpendicular to the in-plane direction of the substrate 50.

However, for example, the core layer 531 and the cladding layer 532 may be manufactured by stacking thin films in layers in the Z-axis direction. In this case, the pair of sidewalls 531a may be formed with a slight inclination from a direction parallel to the Z-axis direction. When the optical pulses Pb1 and Pb2 are input in the TE mode, leakage of the evanescent wave tends to occur in the in-plane direction of the substrate 50. Since the in-plane direction of the substrate 50 crosses the direction in which the pair of sidewalls 531a are formed, in the TE mode, the influence of the inclination of the pair of sidewalls 531a is more significant, and the influence of polarization mixing may become larger. That is, structural factors of the waveguide 53, such as the inclination of the pair of sidewalls 531a, affect the magnitude of polarization mixing, and consequently, affect the repetitive measurement error of the amount of chromatic dispersion. In the inspection device 1, by regarding the amount of chromatic dispersion as a feature quantity in the time waveform and using the repetitive measurement error of the feature quantity calculated based on a plurality of feature quantities, it is possible to accurately determine whether the photonic integrated circuit 5 is acceptable or defective while taking into account the structural factors described above.

FIG. 1 is referred to again. The second adjustment unit 6 adjusts the polarization direction of the pulse train Pb, which has been output from the photonic integrated circuit 5 and in which chromatic dispersion has occurred. The second adjustment unit 6 adjusts the polarization direction of the pulse train Pb to extract the TE-mode components of each of the optical pulses Pb1 and Pb2 of the pulse train Pb. As will be described in detail later, in the present embodiment, since the polarization direction of the correlation optical system 7 is the same as the polarization direction in the TE mode, the polarization direction of each of the optical pulses Pb1 and Pb2 of the pulse train Pb input to the subsequent correlation optical system 7 can be made to match the polarization direction of the correlation optical system 7 by the second adjustment unit 6.

In one example, the inspection device 1 further includes a second polarization-maintaining fiber 12 that optically connects the optical output end 5b of the photonic integrated circuit 5 and the optical input end 7a of the correlation optical system 7. The second polarization-maintaining fiber 12 is, for example, a polarization-maintaining fiber that maintains the polarization direction of the pulse train Pb, similar to the first polarization-maintaining fiber 11.

The second adjustment unit 6 is a rotation mechanism that rotates the second polarization-maintaining fiber 12 around its axis. For example, the second adjustment unit 6 rotates the second polarization-maintaining fiber 12 around its axis to extract the TE-mode components of each of the optical pulses Pb1 and Pb2 of the pulse train Pb. The axis of the second polarization-maintaining fiber 12 matches the traveling direction (X-axis direction) of the pulse train Pb. The second adjustment unit 6 is, for example, a fiber rotator. The second adjustment unit 6 receives, from the determination unit 9, an instruction regarding an angle for rotating the second polarization-maintaining fiber 12, for example. Based on this instruction, the second adjustment unit 6 may rotate the second polarization-maintaining fiber 12 around the axis of the second polarization-maintaining fiber 12. For example, the second adjustment unit 6 rotates the second polarization-maintaining fiber 12 by a predetermined angle around its axis. In this case, the polarization directions of the optical pulses Pb1 and Pb2 are rotated by a predetermined angle.

In the example shown in FIG. 1, the polarization directions of the optical pulses Pb1 and Pb2 are inclined by the second angle θ₂ from the in-plane direction of the substrate 50 at the time the optical pulses Pb1 and Pb2 are output from the photonic integrated circuit 5, as described above. Therefore, the second adjustment unit 6 extracts the TE-mode components of the optical pulses Pb1 and Pb2 by adjusting the polarization axis of the second polarization-maintaining fiber 12 to be parallel to the Y-axis (for example, by rotating the second polarization-maintaining fiber 12 around its axis by the second angle θ₂). As a result, the polarization directions of the optical pulses Pb1 and Pb2 emitted from the photonic integrated circuit 5 match the polarization direction of the correlation optical system 7.

The correlation optical system 7 generates correlation light, including cross-correlation light or auto-correlation light, of the pulse train Pb output from the photonic integrated circuit 5 through the waveguide 53. In the present embodiment, the correlation optical system 7 includes a lens 71, an optical element 72, and a lens 73. The lens 71 is provided on an optical path between the pulse forming unit 3 and the optical element 72, and condenses the pulse train Pb output from the second adjustment unit 6 onto the optical element 72.

The optical element 72 is, for example, a light-emitting body containing at least one of a nonlinear optical crystal that generates a second harmonic (SHG) and a phosphor. Examples of the nonlinear optical crystal include a KTP (KTiOPO₄) crystal, an LBO (LiB₃O₅) crystal, and a BBO (β-BaB₂O₄) crystal. Examples of the phosphor include coumarin, stilbene, and rhodamine. The optical element 72 receives the pulse train Pb as its input and generates correlation light Pc including the cross-correlation or auto-correlation of the pulse train Pb.

The optical element 72 has polarization dependence in a predetermined direction. For example, the optical element 72 is an element having polarization dependence in the polarization directions of the optical pulses Pb1 and Pb2 of the pulse train Pb. In the present embodiment, the polarization direction in which the optical element 72 has polarization dependence matches the polarization direction in the TE mode. Since the pulse train Pb is input to the correlation optical system 7 by the second adjustment unit 6 such that the polarization directions of the optical pulses Pb1 and Pb2 match the polarization direction in which the optical element 72 has polarization dependence, the correlation optical system 7 can efficiently generate the correlation light Pc. The lens 71 collimates or condenses the correlation light Pc output from the optical element 72.

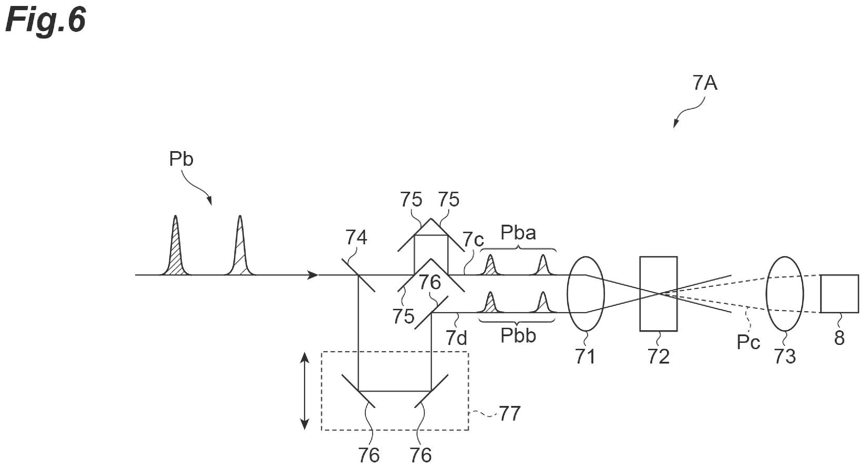

Here, an example of the configuration of the correlation optical system 7 will be described in detail. FIG. 6 is a drawing schematically showing an example of the configuration of the correlation optical system 7. This correlation optical system 7A includes a beam splitter 74 as an optical branching component that splits the pulse train Pb into two. The beam splitter 74 is optically coupled to the second adjustment unit 6 shown in FIG. 1, and transmits a part of the pulse train Pb input from the second adjustment unit 6 while reflecting the remainder. The splitting ratio of the beam splitter 74 is, for example, 1:1.

One pulse train Pba, which is split by the beam splitter 74, reaches the lens 71 through an optical path 7c including a plurality of mirrors 75. The other pulse train Pbb, which is split by the beam splitter 74, reaches the lens 71 through an optical path 7d including a plurality of mirrors 76. The optical length of the optical path 7c and the optical length of the optical path 7d are different from each other. Therefore, the plurality of mirrors 75 and the plurality of mirrors 76 form a delay optical system that provides a time difference between the one pulse train Pba and the other pulse train Pbb split by the beam splitter 74. In addition, at least some of the plurality of mirrors 76 are mounted on a movable stage 77, and the optical length of the optical path 7d is variable. Therefore, in this configuration, the time difference between the pulse train Pba and the pulse train Pbb can be made variable.

In this example, the optical element 72 includes a nonlinear optical crystal. The lens 71 condenses each of the pulse trains Pba and Pbb toward the optical element 72, and causes the optical axes of the pulse trains Pba and Pbb to cross each other at a predetermined angle in the optical element 72. As a result, in the optical element 72, which is a nonlinear optical crystal, a second harmonic is generated with the intersection of the pulse trains Pba and Pbb as its starting point. This second harmonic is the correlation light Pc, which includes the auto-correlation of the pulse train Pb. This correlation light Pc is collimated or condensed by the lens 73 and then input to the optical detection unit 8.

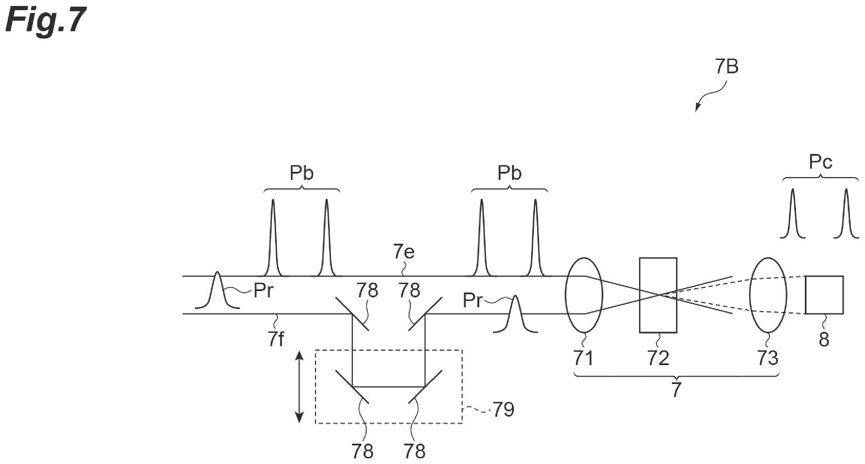

FIG. 7 is a drawing schematically showing another example of the configuration of the correlation optical system 7. In this correlation optical system 7B, the pulse train Pb reaches the lens 71 through an optical path 7e, and a reference optical pulse Pr, which is a single pulse, reaches the lens 71 through an optical path 7f. The optical path 7f includes a plurality of mirrors 78, and is bent in a U-shape. In addition, at least some of the plurality of mirrors 78 are mounted on a movable stage 79, and the optical length of the optical path 7f is variable. Therefore, in this configuration, the time difference between the pulse train Pb and the reference optical pulse Pr (difference in timing of reaching the lens 71) can be made variable.

In this example as well, the optical element 72 includes a nonlinear optical crystal. The lens 71 condenses the pulse train Pb and the reference optical pulse Pr toward the optical element 72, and causes the optical axis of the pulse train Pb and the optical axis of the reference optical pulse Pr to cross each other at a predetermined angle in the optical element 72. As a result, in the optical element 72, which is a nonlinear optical crystal, a second harmonic is generated with the intersection of the pulse train Pb and the reference optical pulse Pr as its starting point. This second harmonic is the correlation light Pc, which includes the cross-correlation of the pulse train Pb. This correlation light Pc is collimated or condensed by the lens 73 and then input to the optical detection unit 8.

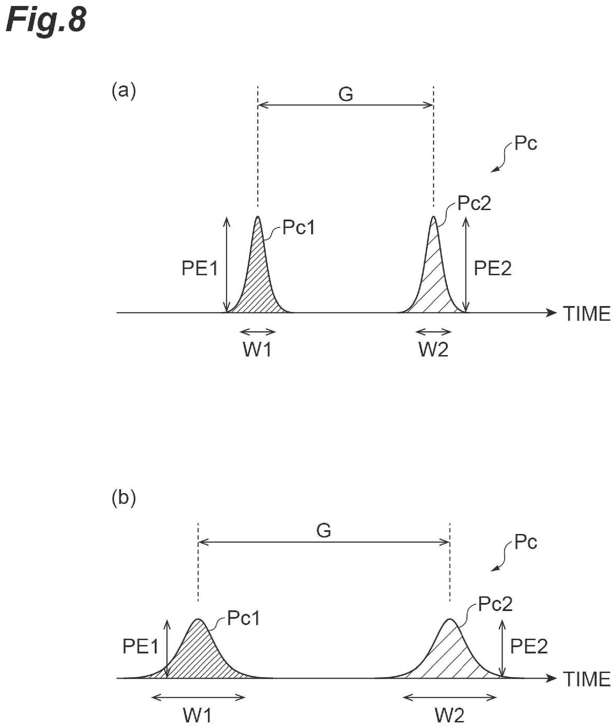

FIG. 8 is a drawing for conceptually explaining the feature quantity of the correlation light Pc. FIG. 8(a) shows an example of the time waveform of the correlation light Pc when no chromatic dispersion occurs in the pulse train Pb (the amount of chromatic dispersion is zero) in the waveguide 53 of the photonic integrated circuit 5. FIG. 8(b) shows an example of the time waveform of the correlation light Pc when chromatic dispersion occurs in the pulse train Pb (the amount of chromatic dispersion is not zero) in the waveguide 53 of the photonic integrated circuit 5. In the example shown in FIG. 8, the correlation light Pc includes two optical pulses Pc1 and Pc2 corresponding to the optical pulses Pb1 and Pb2, respectively. Here, the peak intensity of the optical pulse Pc1 is defined as PE1, and the peak intensity of the optical pulse Pc2 is defined as PE2. The full width at half maximum (FWHM) of the optical pulse Pc1 is defined as W1, and the full width at half maximum of the optical pulse Pc2 is defined as W2. The peak time interval (pulse interval) between the peak of the optical pulse Pc1 and the peak of the optical pulse Pc2 is defined as G.

As shown in FIGS. 8(a) and 8(b), when chromatic dispersion occurs in the pulse train Pb, the peak intensities PE1 and PE2 of the optical pulses Pc1 and Pc2 are lower and the full widths at half maximum W1 and W2 of the optical pulses Pc1 and Pc2 are larger than those when chromatic dispersion does not occur. In addition, the peak time interval G becomes longer.

Thus, when chromatic dispersion occurs in the pulse train Pb, the feature quantities (the peak intensities PE1 and PE2, the full widths at half maximum W1 and W2, and the peak time interval G) of the time waveform of the correlation light Pc change significantly compared to the case where no chromatic dispersion occurs. Then, the amount of change depends on the amount of chromatic dispersion of the pulse train Pb in the waveguide 53. Therefore, there is a correlation between the feature quantity of the time waveform of the correlation light Pc and the amount of chromatic dispersion. Based on this correlation, the inspection device 1 in the present disclosure regards the amount of chromatic dispersion as a feature quantity in the time waveform to determine whether the photonic integrated circuit 5 is acceptable or defective.

Referring again to FIG. 1. The optical detection unit 8 receives the correlation light Pc output from the correlation optical system 7 and detects the time waveform of the correlation light Pc. The optical detection unit 8 includes a photodetector, such as a photodiode, for example. The optical detection unit 8 detects the time waveform of the correlation light Pc by converting the intensity of the correlation light Pc into an electrical signal. The electrical signal, which is the detection result, is provided to the determination unit 9.

The determination unit 9 determines whether the photonic integrated circuit 5 is acceptable or defective based on the feature quantities of the time waveform of the correlation light Pc provided from the optical detection unit 8. As described above, when the correlation light Pc including the cross-correlation or auto-correlation of the pulse train Pb is generated, various feature quantities (for example, a pulse interval, a peak intensity, and a pulse width) in the time waveform of the correlation light Pc have a significant correlation with the amount of chromatic dispersion of the measurement target. Therefore, the determination unit 9 can accurately estimate the amount of chromatic dispersion of the pulse train Pb in the photonic integrated circuit 5, which is a measurement target, by evaluating the feature quantities of the time waveform of the correlation light Pc.

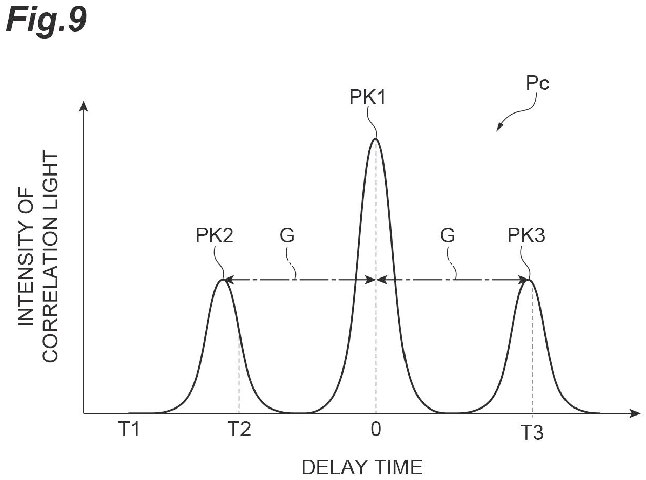

The time waveform of the correlation light Pc will be described in more detail. FIG. 9 is a graph showing an example of the time waveform of the correlation light Pc. The horizontal axis of the graph of the time waveform of correlation light Pc represents the delay time, and the vertical axis of the graph of the time waveform of correlation light Pc represents the intensity of correlation light Pc.

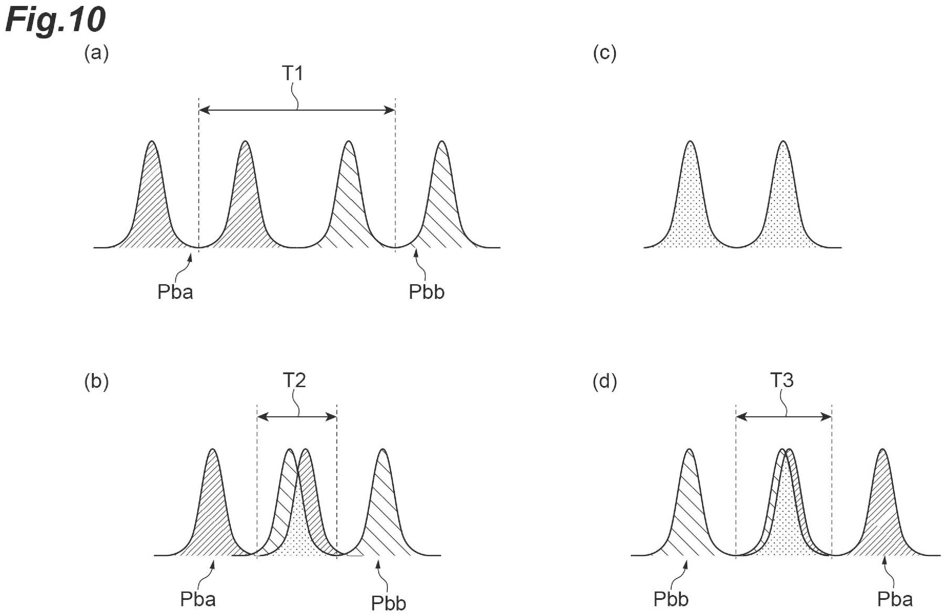

In the correlation optical system 7A shown in FIG. 6, the pulse train Pb is split into the pulse train Pba and the pulse train Pbb by the beam splitter 74. Then, the pulse train Pba and the pulse train Pbb are input to the optical element 72. In the optical element 72, the correlation light Pc, which is a second harmonic, is generated, and the correlation light Pc is input to the optical detection unit 8. The optical detection unit 8 detects the intensity of the correlation light Pc. The intensity of the correlation light Pc changes depending on the time difference between the pulse train Pba and the pulse train Pbb, in other words, the delay time of the pulse train Pba with respect to the pulse train Pbb, or the delay time of the pulse train Pbb with respect to the pulse train Pba. The delay time is adjusted by the movable stage 77. As for the delay time, as shown in FIGS. 10(a) to 10(d), times from the middle of the two pulses included in the pulse train Pba to the middle of the two pulses included in the pulse train Pbb are defined as delay times T1, T2, and T3.

The optical detection unit 8 includes, for example, a control unit in addition to a photodetector, and the control unit changes the delay time by gradually changing the position of the movable stage 77. In addition, the control unit may include, for example, a counter to measure the delay time each time the pulse train Pb is input. Then, the control unit may generate the time waveform of the correlation light Pc by plotting the intensity of the electrical signal of the correlation light Pc detected by the photodetector for each measured delay time.

In the example shown in FIG. 9, the intensity of the correlation light Pc is shown for cases where the delay time is T1, T2, 0, and T3. As shown in FIG. 10(a), the delay time T1 is the delay time of the pulse train Pba with respect to the pulse train Pbb. At the delay time T1, the pulse train Pba lags behind the pulse train Pbb, and the pulse train Pbb and the pulse train Pba do not overlap at all. As shown in FIG. 10(b), the delay time T2 is the delay time of the pulse train Pba with respect to the pulse train Pbb. At the delay time T2, the pulse train Pba lags behind the pulse train Pbb, and a part of the pulse train Pbb and a part of the pulse train Pba overlap each other. The case where the delay time is 0 is a case where there is no time difference between the pulse train Pba and the pulse train Pbb, as shown in FIG. 10(c). In this case, the pulse train Pbb and the pulse train Pba completely overlap each other. As shown in FIG. 10(d), the delay time T3 is the delay time of the pulse train Pbb with respect to the pulse train Pba. At the delay time T3, the pulse train Pbb lags behind the pulse train Pba, and a part of the pulse train Pbb and a part of the pulse train Pba overlap each other.

As shown in FIGS. 9 and 10, the smaller the time difference between the pulse train Pba and the pulse train Pbb and the larger the overlapping area between the pulse train Pbb and the pulse train Pba, the stronger the light intensity of the correlation light Pc becomes. The time waveform of the correlation light Pc includes a first peak PK1, a second peak PK2, and a third peak PK3. The first peak PK1 occurs when the delay time is 0. The second peak PK2 occurs when the pulse train Pba lags behind the pulse train Pbb and one of the two pulses in the pulse train Pbb completely overlaps one of the two pulses in the pulse train Pba. The third peak PK3 occurs when the pulse train Pbb lags behind the pulse train Pba and the other of the two pulses in the pulse train Pbb completely overlaps the other of the two pulses in the pulse train Pba.

The optical detection unit 8 detects, for example, the interval between the first peak PK1 and the second peak PK2 or the interval between the first peak PK1 and the third peak PK3, as the peak time interval G, which is a type of feature quantity of the time waveform. The optical detection unit 8 may provide the detected peak time interval G to the determination unit 9.

In the example described above, the case where the control unit included in the optical detection unit 8 generates the time waveform of the correlation light Pc has been described. However, the determination unit 9 may generate the time waveform of the correlation light Pc. That is, the determination unit 9 may function as an optical detection unit. In this case, the optical detection unit 8 may include a photodetector and output the electrical signal of the detected correlation light Pc to the determination unit 9. Alternatively, the determination unit 9 may include a photodetector instead of the optical detection unit 8. In this case, the correlation light Pc may be input from the correlation optical system 7A to the determination unit 9, and the photodetector of the determination unit 9 may detect the time waveform of the correlation light Pc and convert the intensity of the correlation light Pc into an electrical signal. The determination unit 9 may generate the time waveform of the correlation light Pc by plotting the intensity of the electrical signal of the correlation light Pc output from the optical detection unit 8 or the intensity of the electrical signal converted by the photodetector of the determination unit 9, for each measured delay time. The determination unit 9 may change the delay time by gradually changing the position of the movable stage 77.

In the example described above, the correlation optical system 7A has been described as an example, but the example described above may also be applied to the correlation optical system 7B. In this case, the optical detection unit 8 or the determination unit 9 may change the delay time of the pulse train Pb with respect to the reference optical pulse Pr or the delay time of the reference optical pulse Pr with respect to the pulse train Pb by gradually changing the position of the movable stage 79. Then, the optical detection unit 8 or the determination unit 9 may generate the time waveform of the correlation light Pc by plotting the intensity of the electrical signal of the correlation light Pc for each measured delay time. Even when the above example is applied to the correlation optical system 7B, the determination unit 9 may function as an optical detection unit, similar to the case where it is when applied to the correlation optical system 7A.

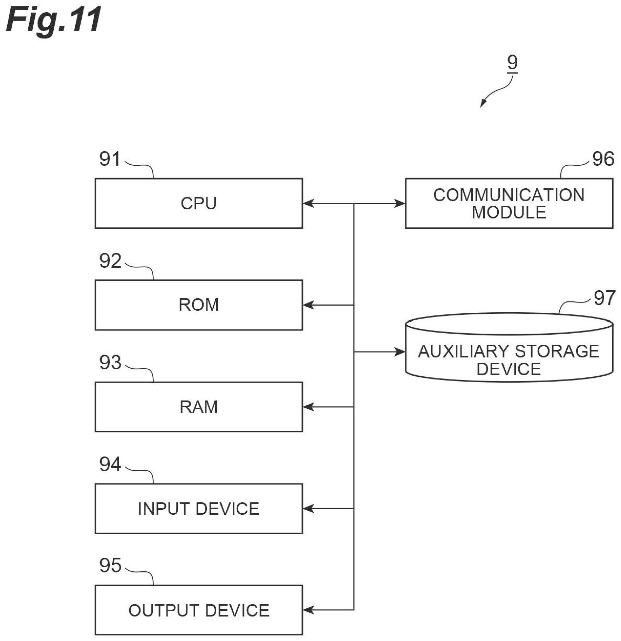

FIG. 11 is a diagram schematically showing an example of the hardware configuration of the determination unit 9. As shown in FIG. 11, the determination unit 9 may be physically configured as a typical computer including a processor (CPU) 91, main storage devices such as a ROM 92 and a RAM 93, an input device 94 such as a keyboard, a mouse, and a touch screen, an output device 95 such as a display (including a touch screen), a communication module 96 such as a network card for transmitting and receiving data to and from other devices, and an auxiliary storage device 97 such as a hard disk.

The processor 91 of the computer can realize the functions of the determination unit 9 described above through a chromatic dispersion amount calculation program. In other words, the chromatic dispersion amount calculation program causes the processor 91 of the computer to operate as the determination unit 9. The chromatic dispersion amount calculation program is stored in an internal or external storage device (storage medium) of the computer, such as the auxiliary storage device 97. The storage device may be a non-transitory recording medium. Examples of the recording medium include recording media such as a flexible disk, a CD, and a DVD, a recording medium such as a ROM, a semiconductor memory, and a cloud server.

### [Inspection method using an inspection device]

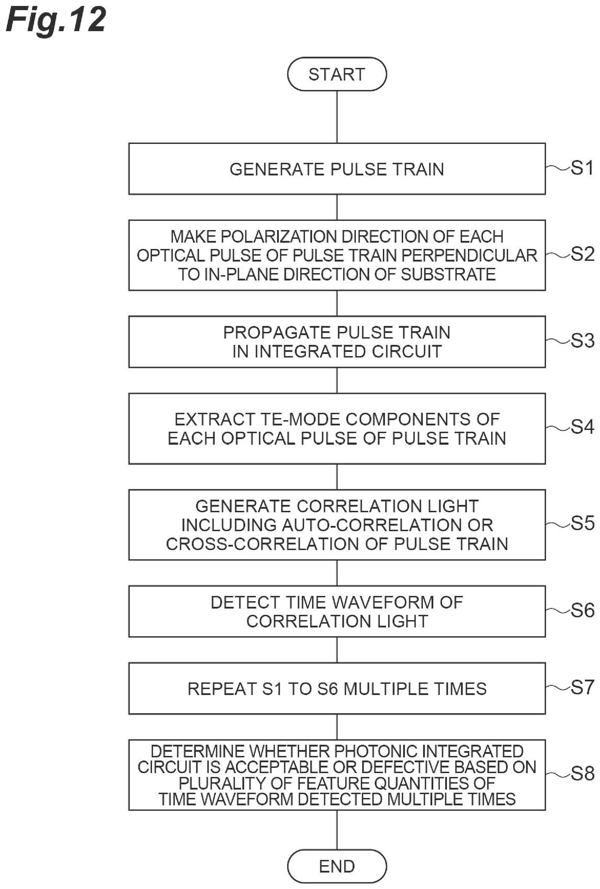

FIG. 12 is a flowchart showing an inspection method using the inspection device 1 having the above-described configuration. In this method, first, in a pulse forming step S1, the pulse train Pb is generated in which a plurality of optical pulses Pb1 and Pb2 having different center wavelengths are arranged at predetermined time intervals. For example, a plurality of wavelength components included in the optical pulse to be measured Pa are spatially separated for each wavelength, intensity modulation and phase modulation are performed on the plurality of wavelength components using the spatial light modulator 33, and then the plurality of wavelength components are condensed. In this manner, it is possible to easily generate the pulse train Pb.

Then, in a first adjustment step S2, the polarization direction of each of the optical pulses Pb1 and Pb2 of the pulse train Pb input to the photonic integrated circuit 5 is made to match the in-plane direction of the substrate 50. For example, the first polarization-maintaining fiber 11, which optically connects the pulse forming unit 3 and the photonic integrated circuit 5, is rotated around its axis using a rotation mechanism. The first polarization-maintaining fiber 11 is rotated such that the polarization directions of the optical pulses Pb1 and Pb2 match the in-plane direction of the substrate 50.

Then, in a propagation step S3, the pulse train Pb is propagated through the waveguide 53 of the photonic integrated circuit 5. The optical pulses Pb1 and Pb2, whose polarization directions have been rotated in the first adjustment step S2, are input from the optical input section 51, guided by the waveguide 53, and then output from the optical output section 52. In the propagation step S3, chromatic dispersion occurs in the pulse train Pb while the pulse train Pb propagates through the waveguide 53. For example, a difference arises between the propagation time of the optical pulse Pb1 and the propagation time of the optical pulse Pb2, causing the time interval between the optical pulse Pb1 and the optical pulse Pb2 to fluctuate.

Then, in a second adjustment step S4, the TE-mode components of each of the optical pulses Pb1 and Pb2 of the pulse train Pb output from the photonic integrated circuit 5 are extracted. For example, using a rotation mechanism, the second polarization-maintaining fiber 12, which optically connects the photonic integrated circuit 5 and the correlation optical system 7, is rotated around the axis of the second polarization-maintaining fiber 12 so that the TE-mode components of each of the optical pulses Pb1 and Pb2 of the pulse train Pb output from the photonic integrated circuit 5 are extracted. In this manner, the second polarization-maintaining fiber 12 can also be rotated so that the polarization directions of the optical pulses Pb1 and Pb2 match the polarization direction of the correlation optical system 7. In addition, by using a rotation mechanism, the polarization axis of the second polarization-maintaining fiber 12 may be adjusted so that the TE mode components of each of the optical pulses Pb1 and Pb2 of the pulse train Pb are extracted. As a result, the TE-mode components of each of the optical pulses Pb1 and Pb2 of the pulse train Pb can be selectively extracted.

Then, in a correlation light generation step S5, the correlation light Pc including the cross-correlation or auto-correlation of the pulse train Pb is generated using the optical element 72 containing at least one of a nonlinear optical crystal and a phosphor. For example, the pulse train Pb is split into two as shown in FIG. 6, one split pulse train Pbb is time-delayed with respect to the other pulse train Pba, and the correlation light Pc including the auto-correlation of the pulse train Pb is generated based on the time-delayed one pulse train Pbb and the other pulse train Pba.

Then, in an optical detection step S6, the time waveform of the correlation light Pc is detected. The time waveform of the correlation light Pc includes feature quantities.

Then, in a repetition step S7, the pulse forming step S1 through the optical detection step S6 are repeated multiple times. In the repetition step S7, for example, the optical detection unit 8 detects the time waveform multiple times. The number of repetitions may be, for example, two or more and ten or less. Each of the time waveforms detected multiple times may include different feature quantities for each time waveform.

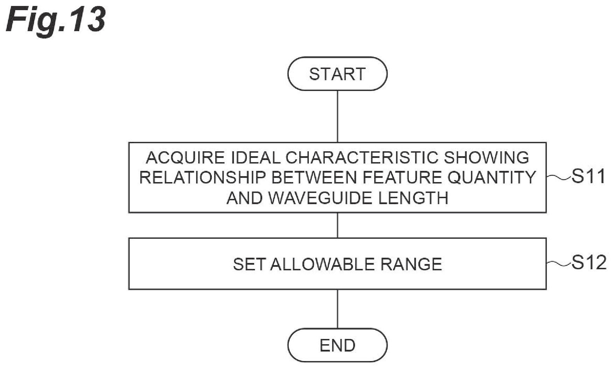

Then, in a determination step S8, whether the photonic integrated circuit 5 is acceptable or defective is determined based on the plurality of feature quantities in the time waveform detected multiple times. Here, whether the photonic integrated circuit 5 is acceptable or defective is determined by comparing an allowable range set in advance with the plurality of features. FIG. 13 is a flowchart showing an example of a method for setting the allowable range. The allowable range may be set at any timing in the flowchart showing the inspection method shown in FIG. 12. The allowable range may be set before the pulse forming step S1, or may be set before the determination step S8.

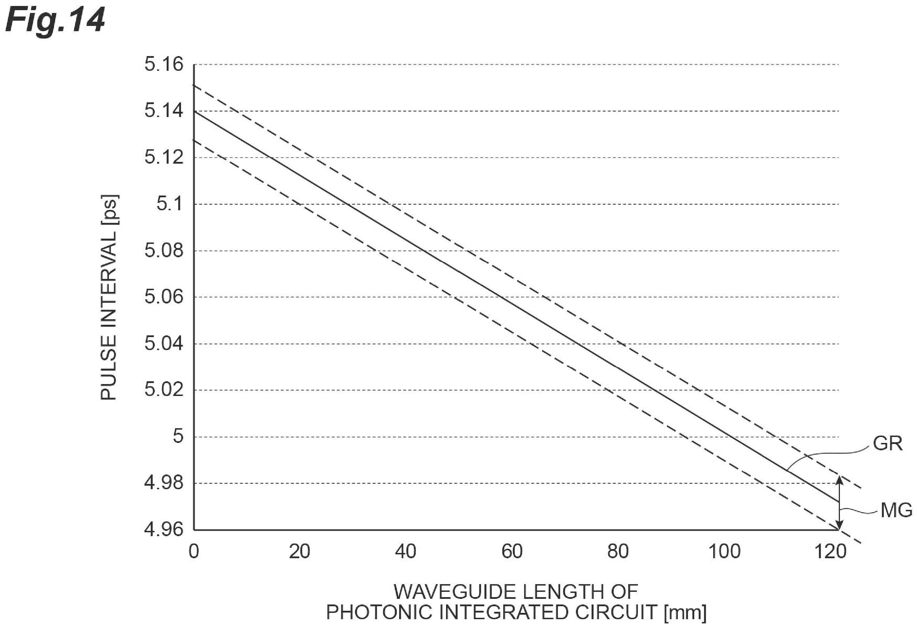

First, in an ideal characteristic acquisition step S11, an ideal characteristic showing the relationship between the feature quantity and the waveguide length is acquired. In the following explanation, a peak time interval G (pulse interval) between the peak of the optical pulse Pc1 and the peak of optical pulse Pc2 will be described as an example of the feature quantity. FIG. 14 is a drawing showing an example of an ideal characteristic GR and an allowable range MG. In the ideal characteristic GR, the pulse interval tends to decrease as the length of the waveguide 53 increases. The length of the waveguide 53 and the pulse interval show a linear relationship.

The ideal characteristic GR differs depending on the cross-sectional area, structure, or material of the core layer 531 and cladding layer 532 that form the waveguide 53. FIG. 5 is referred to again. For example, the ideal characteristic GR changes when the height h or width w of the core layer 531 is changed. Alternatively, for example, the ideal characteristic GR changes when the cross-sectional shape of the core layer 531 is changed from a rectangular shape to a trapezoidal shape.

In the ideal characteristic acquisition step S11, the ideal characteristic GR may be acquired for each cross-sectional area, structure, or material of the core layer 531 and the cladding layer 532. In the ideal characteristic acquisition step S11, for example, the ideal characteristic GR may be statistically derived from characteristics measured in the past showing the relationship between the feature quantities and the waveguide length. Alternatively, in the ideal characteristic acquisition step S11, the ideal characteristic GR may be theoretically derived using methods, such as numerical analysis and machine learning, based on data on the cross-sectional area, structure, or material of the core layer 531 and the cladding layer 532.

Then, in the allowable range setting step S12, the allowable range MG to be compared with the plurality of feature quantities is set. As shown in FIG. 14, the allowable range MG may be set based on the ideal characteristic GR. For example, the allowable range MG may be set to a predetermined numerical range with respect to the ideal characteristic GR. The predetermined numerical range may be, for example, ±5%. The predetermined numerical range may be, for example, ±2% to ±10%. Alternatively, the allowable range MG may be set by the user to an arbitrary range with respect to the ideal characteristic GR, based on the time waveforms detected multiple times in the repetition step S7. The set allowable range MG is stored, for example, in the auxiliary storage device 97 (storage unit).

FIG. 12 is referred to again. In the determination step S8, whether the photonic integrated circuit 5 is acceptable or defective is determined by comparing the set allowable range MG with the plurality of feature quantities (pulse intervals). In the determination step S8, for example, the determination unit 9 determines whether the photonic integrated circuit 5 is acceptable or defective by reading the data of the allowable range MG from the auxiliary storage device 97.

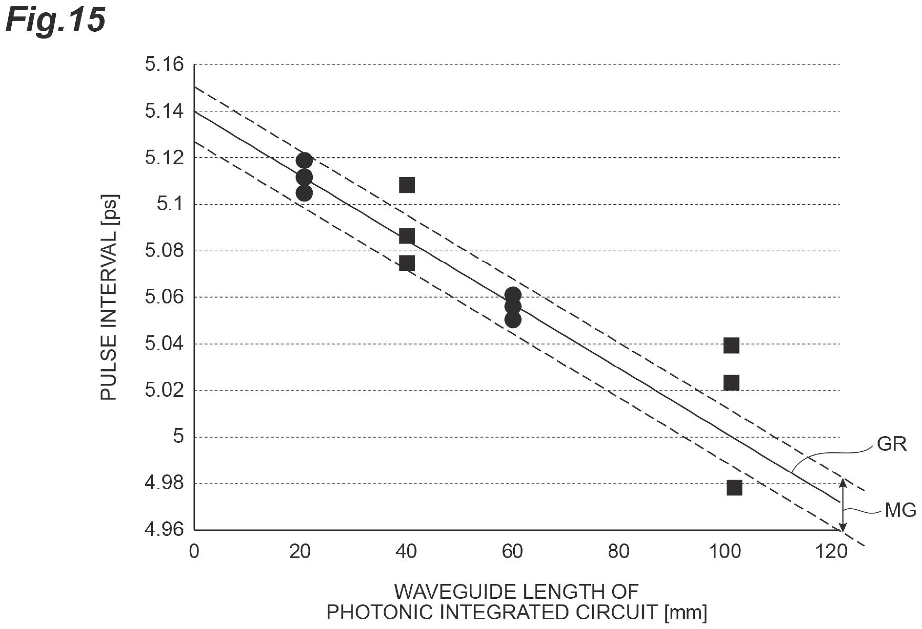

FIG. 15 is a graph showing an example of how to determine whether the photonic integrated circuit 5 is acceptable or defective. In the example shown in FIG. 15, in the waveguide 53 whose core layer 531 and cladding layer 532 have the same cross-sectional area, structure, or material, the pulse interval values measured when the length of the waveguide 53 is 20 mm, 40 mm, 60 mm, and 100 mm are shown. In the example shown in FIG. 15, the pulse interval is measured three times for each waveguide length, and the measured pulse interval values are compared with the allowable range MG.

In the example shown in FIG. 15, when even one of the three pulse interval values falls outside the allowable range MG, the photonic integrated circuit 5 as a measurement target may be determined to be "defective". On the other hand, when all of the three pulse interval values fall within the allowable range MG, the photonic integrated circuit 5 as a measurement target may be determined to be "acceptable". For example, when the waveguide length is 20 mm, the photonic integrated circuit 5 with a waveguide length of 20 mm is determined to be "acceptable" because all of the three pulse interval values fall within the allowable range MG. For example, when the waveguide length is 40 mm, the photonic integrated circuit 5 with a waveguide length of 40 mm is determined to be "defective" because one of the three pulse interval values falls outside the allowable range MG.

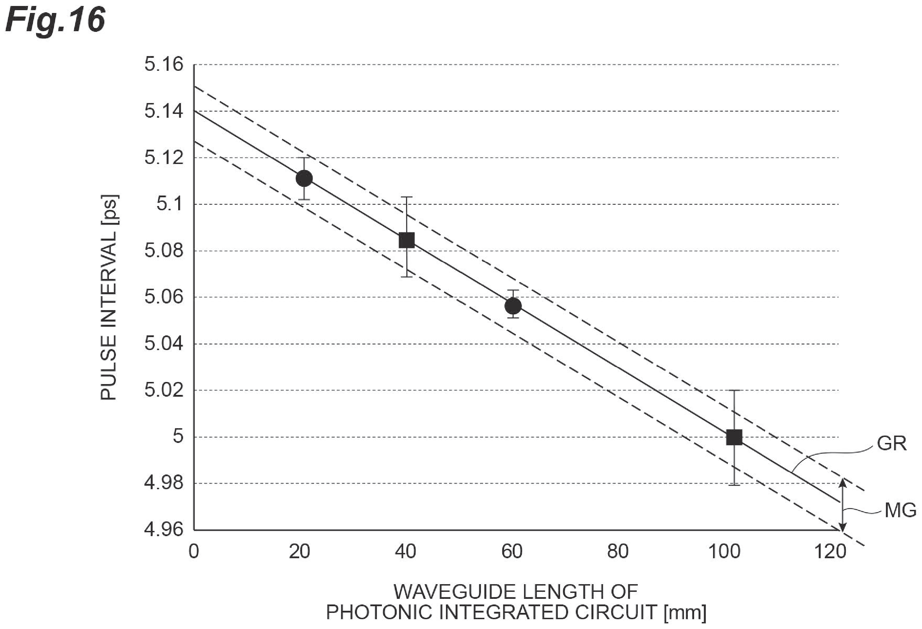

FIG. 16 is a graph showing another example of how to determine whether the photonic integrated circuit 5 is acceptable or defective. The example shown in FIG. 16 is different from the example shown in FIG. 15 in that the measurement error amount of the three pulse interval values is calculated and the measurement error amount is compared with the allowable range MG. The measurement error amount is a value calculated by statistically processing the three pulse interval values, and is, for example, a standard deviation.

In the example shown in FIG. 16, when the measurement error amount falls outside the allowable range MG, the photonic integrated circuit 5 as a measurement target may be determined to be "defective". On the other hand, when the measurement error amount falls within the allowable range MG, the photonic integrated circuit 5 as a measurement target may be determined to be "acceptable". For example, when the waveguide length is 20 mm, the photonic integrated circuit 5 with a waveguide length of 20 mm is determined to be "acceptable" because the measurement error amount falls within the allowable range MG. For example, when the waveguide length is 40 mm, the photonic integrated circuit 5 with a waveguide length of 40 mm is determined to be "defective" because the measurement error amount falls outside the allowable range MG.

### [Functions and effects]

As described above, in the inspection device 1, the pulse train Pb is input to the photonic integrated circuit 5 such that the polarization direction of each of the plurality of optical pulses Pb1 and Pb2 matches the in-plane direction of the substrate 50. Therefore, since the polarization directions of the plurality of optical pulses Pb1 and Pb2 cross structures such as the sidewalls 531a that form the waveguide 53, if there is an abnormality in the formation state, the repetitive measurement error of the amount of chromatic dispersion increases. In this inspection device 1, the amount of chromatic dispersion is regarded as a feature quantity in the time waveform. By using the repetitive measurement error of the feature quantity calculated based on a plurality of feature quantities, it is possible to improve the accuracy of determining whether the photonic integrated circuit 5 is acceptable or defective while taking structural factors into account.

On the other hand, since the repetitive measurement error of the feature quantity is large, for example, if whether the photonic integrated circuit 5 is acceptable or defective is determined based only on the feature quantity in the time waveform detected once, there is a risk of making an incorrect determination. In contrast, in the inspection device 1, the determination unit 9 determines whether the photonic integrated circuit 5 is acceptable or defective based on a plurality of feature quantities of the time waveform detected multiple times. As a result, erroneous determination on whether the photonic integrated circuit 5 is acceptable or defective is suppressed, enabling accurate determination on whether the photonic integrated circuit 5 is acceptable or defective.

In addition, in the inspection device 1, the pulse train Pb is input to the photonic integrated circuit 5 such that the polarization direction of each of the plurality of optical pulses Pb1 and Pb2 matches the in-plane direction of the substrate 50. This makes the pulse train Pb less susceptible to the influence on the amount of chromatic dispersion by at least one of the upper wall 531b and the lower wall 531c of the core layer 531. The influence on the amount of chromatic dispersion by at least one of the upper wall 531b and the lower wall 531c of the core layer 531 is, for example, the surface roughness of at least one of the upper wall 531b and the lower wall 531c. Alternatively, the amount of chromatic dispersion may also be affected when a special coating material is applied to at least one of the upper wall 531b and the lower wall 531c or when at least one of the upper wall 531b and the lower wall 531c is not covered by the cladding layer 532 and is exposed to air. Since the in-plane direction of the substrate 50 is parallel to the direction in which the upper wall 531b and the lower wall 531c are formed, the pulse train Pb is less susceptible to the influence of the upper wall 531b and the lower wall 531c. As a result, it is possible to determine whether the photonic integrated circuit 5 is acceptable or defective while accurately taking into account the inclination of the pair of sidewalls 531a.

The determination unit 9 may determine whether the photonic integrated circuit 5 is acceptable or defective according to whether or not the plurality of feature quantities fall within the allowable range MG set in advance. In this case, the accuracy of determining whether the photonic integrated circuit 5 is acceptable or defective can be further improved by comparing the plurality of feature quantities with the allowable range.

The determination unit 9 may determine whether the photonic integrated circuit 5 is acceptable or defective according to whether or not the measurement error amount calculated based on the plurality of feature quantities falls within the allowable range MG set in advance. In this case, the accuracy of determining whether the photonic integrated circuit 5 is acceptable or defective can be further improved by taking into account the statistical trends of the plurality of feature quantities.

The inspection device 1 may further include a storage unit (auxiliary storage device 97) that stores data of the allowable range MG, and the determination unit 9 may determine whether the photonic integrated circuit 5 is acceptable or defective by reading the data of the allowable range MG from the storage unit. In this case, since the storage unit that stores the data of the allowable range is provided in advance, it is possible to reduce the time required to read the data, thereby shortening the time required to determine whether the photonic integrated circuit 5 is acceptable or defective.

The inspection device 1 may further include the first polarization-maintaining fiber 11 that optically connects the pulse forming unit 3 to the photonic integrated circuit 5, and the first adjustment unit 4 may be a rotation mechanism that rotates the first polarization-maintaining fiber 11 around its axis. In this case, the polarization direction of each of the optical pulses Pb1 and Pb2 of the pulse train Pb input to the photonic integrated circuit 5 can be easily adjusted by rotating the first polarization-maintaining fiber 11 around its axis.

The inspection device 1 may further include the second adjustment unit 6 that extracts the TE-mode components of each of the optical pulses Pb1 and Pb2 of the pulse train Pb output from the photonic integrated circuit 5. In this case, the pulse train Pb is input to the correlation optical system 7 by the second adjustment unit 6 such that the polarization direction (for example, the direction matching the TE mode) of the pulse train Pb matches the polarization direction in which the correlation optical system 7 has polarization dependence. Therefore, the correlation light Pc can be efficiently generated in the correlation optical system 7.

The inspection device 1 may further include the second polarization-maintaining fiber 12 that optically connects the photonic integrated circuit 5 to the correlation optical system 7, and the second adjustment unit 6 may be a rotation mechanism that rotates the second polarization-maintaining fiber 12 around the axis of the second polarization-maintaining fiber 12. In this case, the polarization mode of each of the optical pulses Pb1 and Pb2 of the pulse train Pb input to the second polarization-maintaining fiber 12 can be easily selected by rotating the second polarization-maintaining fiber 12 around the axis relative to the in-plane direction of the substrate 50 of the photonic integrated circuit 5.

The rotation mechanism for rotating the second polarization-maintaining fiber 12 may rotate the second polarization-maintaining fiber 12 around the axis of the second polarization-maintaining fiber 12 so that the TE-mode components of the pulse train Pb output from the photonic integrated circuit 5 are extracted. In this case, it is possible to prevent the pulse train Pb from being input to the correlation optical system 7 in a polarization direction that is not preferable for measurement (for example, a polarization direction deviating from the polarization direction of the correlation optical system 7).

In the inspection method described above, the pulse train Pb is input to the photonic integrated circuit 5 such that the polarization direction of each of the plurality of optical pulses Pb1 and Pb2 matches the in-plane direction of the substrate 50. Therefore, since the polarization directions of the plurality of optical pulses Pb1 and Pb2 cross structures such as the sidewalls 531a that form the waveguide 53, if there is an abnormality in the formation state, the repetitive measurement error of the amount of chromatic dispersion increases. In this inspection method, the amount of chromatic dispersion is regarded as a feature quantity in the time waveform. By using the repetitive measurement error of the feature quantity calculated based on a plurality of feature quantities, it is possible to improve the accuracy of determining whether the photonic integrated circuit 5 is acceptable or defective while taking structural factors into account.

In the determination step S8, whether the photonic integrated circuit 5 is acceptable or defective may be determined according to whether or not the plurality of feature quantities fall within the allowable range MG set in advance. In this case, the accuracy of determining whether the photonic integrated circuit 5 is acceptable or defective can be further improved by comparing the plurality of feature quantities with the allowable range.

In the determination step S8, whether the photonic integrated circuit 5 is acceptable or defective may be determined according to whether or not the measurement error amount of the plurality of feature quantities falls within the allowable range MG set in advance. In this case, the accuracy of determining whether the photonic integrated circuit 5 is acceptable or defective can be further improved by taking into account the statistical trends of the plurality of feature quantities.

### [Modification examples]

While the embodiments of the present disclosure have been described above, the present disclosure is not necessarily limited to the embodiments described above, and various changes can be made without departing from the scope of the present disclosure.

In the allowable range setting step S12, the set allowable range MG may be stored as a list corresponding to the cross-sectional area, structure, or material of the core layer 531 and the cladding layer 532. For example, the allowable range MG is stored as a lookup table. The set allowable range MG may also be stored, for example, in a storage device outside the inspection device 1.

When the polarization directions of the optical pulses Pb1 and Pb2 match the in-plane direction of the substrate 50 at the time the optical pulses Pb1 and Pb2 are output from the pulse forming unit 3, the first adjustment unit 4 may maintain the polarization directions without rotating the first polarization-maintaining fiber 11. In this case, the first adjustment step S2 may be omitted.

When the polarization directions of the optical pulses Pb1 and Pb2 match the in-plane direction of the substrate 50 at the time the optical pulses Pb1 and Pb2 are output from the photonic integrated circuit 5, the second adjustment unit 6 may maintain the polarization directions without rotating the second polarization-maintaining fiber 12. In addition, in the second adjustment unit 6, when the polarization axis of the second polarization-maintaining fiber 12 matches the in-plane direction of the substrate 50, the second polarization-maintaining fiber 12 may be maintained without being rotated. In these cases, the second adjustment step S4 may be omitted.

In the determination step S8, the average value of the three pulse interval values may be calculated, and the average value and the allowable range MG may be compared with each other.

### Reference Signs List

1: inspection device, 3: pulse forming unit, 4: first adjustment unit, 6: second adjustment unit, 5: photonic integrated circuit, 7, 7A, 7B: correlation optical system, 8: optical detection unit, 9: determination unit, 11: first polarization-maintaining fiber, 12: second polarization-maintaining fiber, 33: spatial light modulator, 50: substrate, 53: waveguide, 97: auxiliary storage device (storage unit), MG: allowable range, Pb, Pba, Pbb: pulse train, Pb1, Pb2, Pc1, Pc2: optical pulse, Pc: correlation light, S1: pulse forming step, S2: first adjustment step, S4: second adjustment step, S5: correlation light generation step, S6: optical detection step, S8: determination step.

## Claims

1. An inspection device for inspecting a photonic integrated circuit in which a waveguide is provided on a substrate, the device comprising:
a pulse forming unit that generates a pulse train in which a plurality of optical pulses having different center wavelengths are arranged at predetermined time intervals;
a first adjustment unit that matches a polarization direction of each optical pulse of the pulse train input to the photonic integrated circuit with an in-plane direction of the substrate;
a correlation optical system that has polarization dependence in a predetermined polarization direction and generates correlation light including cross-correlation light or auto-correlation light of the pulse train output from the photonic integrated circuit through the waveguide;
an optical detection unit that detects a time waveform of the correlation light; and
a determination unit that determines whether the photonic integrated circuit is acceptable or defective based on the time waveform,
wherein the optical detection unit detects the time waveform multiple times, and
the determination unit determines whether the photonic integrated circuit is acceptable or defective based on a plurality of feature quantities in the time waveform detected multiple times.

2. The inspection device according to claim 1,
wherein the determination unit determines whether the photonic integrated circuit is acceptable or defective according to whether or not the plurality of feature quantities fall within an allowable range set in advance.

3. The inspection device according to claim 1,
wherein the determination unit determines whether the photonic integrated circuit is acceptable or defective according to whether or not a measurement error amount calculated based on the plurality of feature quantities falls within an allowable range set in advance.

4. The inspection device according to claim 2 or 3, further comprising:
a storage unit that stores data of the allowable range,
wherein the determination unit determines whether the photonic integrated circuit is acceptable or defective by reading the data of the allowable range from the storage unit.

5. The inspection device according to any one of claims 1 to 4, further comprising:
a first polarization-maintaining fiber that optically connects the pulse forming unit to the photonic integrated circuit,
wherein the first adjustment unit is a rotation mechanism that rotates the first polarization-maintaining fiber around its axis.

6. The inspection device according to any one of claims 1 to 5, further comprising:
a second adjustment unit that extracts TE-mode components of the pulse train output from the photonic integrated circuit.

7. The inspection device according to claim 6, further comprising:
a second polarization-maintaining fiber that optically connects the photonic integrated circuit to the correlation optical system,
wherein the second adjustment unit is a rotation mechanism that rotates the second polarization-maintaining fiber around an axis of the second polarization-maintaining fiber.

8. The inspection device according to claim 7,
wherein the rotation mechanism rotates the second polarization-maintaining fiber around the axis of the second polarization-maintaining fiber so that TE-mode components of the pulse train output from the photonic integrated circuit are extracted.

9. An inspection method for inspecting a photonic integrated circuit in which a waveguide is provided on a substrate, the method comprising:
a pulse forming step for generating a pulse train in which a plurality of optical pulses having different center wavelengths are arranged at predetermined time intervals;
a first adjustment step for making a polarization direction of each optical pulse of the pulse train input to the photonic integrated circuit orthogonal to an in-plane direction of the substrate;
a correlation light generation step for generating correlation light including cross-correlation light or auto-correlation light of the pulse train output from the photonic integrated circuit by using a correlation optical system having polarization dependence in a predetermined polarization direction;
an optical detection step for detecting a time waveform of the correlation light; and
a determination step for determining whether the photonic integrated circuit is acceptable or defective based on feature quantities of the time waveform,
wherein, in the optical detection step, the time waveform is detected multiple times, and
in the determination step, whether the photonic integrated circuit is acceptable or defective is determined based on a plurality of feature quantities in the time waveform detected multiple times.

10. The inspection method according to claim 9,
wherein, in the determination step, whether the photonic integrated circuit is acceptable or defective is determined according to whether or not the plurality of feature quantities fall within an allowable range set in advance.

11. The inspection method according to claim 9,
wherein, in the determination step, whether the photonic integrated circuit is acceptable or defective is determined according to whether or not a measurement error amount calculated based on the plurality of feature quantities falls within an allowable range set in advance.
